# EUROPÄISCHE PATENTSCHRIFT

(11) **EP 2 746 005 B1**
(45) Veröffentlichungstag und Bekanntmachung des Hinweises auf die Patenterteilung: **01.02.2017**
(21) Anmeldenummer: 13196180.7
(22) Anmeldetag: 09.12.2013
(51) Int. Cl.: B26D 5/00, B23K 26/04, B24C 1/04, B26F 3/00

(54) **Verfahren zum Bearbeiten einer Folge von Werkstücken mittels mindestens eines Bearbeitungsstrahls**
Method for processing a sequence of workpieces by means of at least one processing beam
Procédé d'usinage d'une séquence de pièces à usiner au moyen d'au moins un faisceau d'usinage

(30) Priorität: 18.12.2012 CH 28532012
(43) Veröffentlichungstag der Anmeldung: 25.06.2014
(73) Patentinhaber: Microwaterjet AG, 4912 Aarwangen (CH)
(72) Erfinder: Maurer, Walter, 4665 Oftringen (CH)
(74) Vertreter: AMMANN PATENTANWÄLTE AG BERN

(56) Entgegenhaltungen:
- EP-A1- 0 522 932
- EP-A1- 1 577 727
- EP-A2- 0 816 957
- WO-A1-02/02268
- DE-A1-102011 103 282
- FR-A1- 2 699 852
- US-A1- 2005 191 951
- US-A1- 2010 193 484
- DATABASE WPI Thomson Scientific, London, GB; AN 2009-L91271 XP002721623, -& CN 101 482 744 A ((JIAN-N) JIANGSU JIABAO TECHNOLOGY TUBE MAKING CO LTD) 15. Juli 2009 (2009-07-15)

## Beschreibung

Die vorliegende Erfindung bezieht sich auf ein Verfahren zum Bearbeiten einer Folge von Werkstücken mittels mindestens eines Bearbeitungsstrahls.

Als Medium wird eine Flüssigkeit mit oder ohne Abrasivteilchen eingesetzt, um einen Bearbeitungsstrahl zu erzeugen. Dieser weist dabei keine festbleibende Geometrie auf, sondern bildet eine Art dynamisches Werkzeug, dessen zeitliche Charakteristik veränderlich ist. Ist z. B. der Flüssigkeitsstrahl aus Wasser mit Abrasivmaterial gebildet, so kann es vorkommen, dass dieses kurzzeitig in vermindertem Masse dem Wasser zugeführt wird und daher der Flüssigkeitsstrahl mit verminderter Energie auf das Werkstück einwirkt.

Die zeitliche Veränderung des Bearbeitungsstrahls kann dazu führen, dass die Werkstücke mit unterschiedlicher Qualität bearbeitet werden. Mit den gängigen Verfahren ist es erforderlich, dass bei der Endkontrolle jedes der Werkstücke untersucht wird, um jene mit verminderter Bearbeitungsqualität finden zu können. Dies macht die Herstellung der Werkstücke relativ aufwendig und führt zu einem erhöhten Ausschuss.

Die EP 0 816 957 A2 beschreibt ein Verfahren für das Abrasivwasserschneiden, bei welchem der Druck in der Düse erfasst und ein entsprechendes Signal der Steuereinheit zugeführt wird. Es sind keine Massnahmen vorgesehen, um die Qualtitätsüberwachung in einer Folge von Werkstücken zu vereinfachen.

Es ist eine Aufgabe der vorliegenden Erfindung, ein rationelleres Verfahren zum Bearbeiten einer Folge von Werkstücken mittels eines Bearbeitungsstrahls anzugeben.

Ein Verfahren, das diese Aufgabe löst, ist im Anspruch 1 angegeben. Die weiteren Ansprüche geben bevorzugte Ausführungen des Verfahrens, eine Bearbeitungsvorrichtung, mit welcher das Verfahren durchführbar ist, sowie eine Verwendung des Verfahrens und/oder der Bearbeitungsvorrichtung an.

Beim Verfahren gemäß dem Anspruch 1 wird jedem Werkstück ein Kennzeichen zum eindeutigen Identifizieren zugeordnet und es wird für das jeweilige Werkstück die zeitliche Charakteristik des Bearbeitungsstrahls mittels mindestens eines Sensors erfasst, ausgewertet und mit mindestens einem Schwellenwert verglichen. Dadurch lassen sich Fehler in der Bearbeitung einfacher erkennen.

Vorzugsweise wird dem Werkstück ein Fehlerindikator zugeordnet. Dadurch können bei der Endkontrolle gezielt jene Werkstücke auf ihre tatsächliche Bearbeitungsqualität untersucht werden, welche einen positiven Fehlerindikator haben.

Die Erfindung wird im Folgenden anhand eines Ausführungsbeispiels unter Bezugnahme auf Figuren erläutert. Es zeigen
Fig. 1 eine perspektivische Ansicht einer erfindungsgemässen Bearbeitungsvorrichtung;
Fig. 2 eine Draufsicht eines Beispiels eines zu bearbeitenden Werkstücks;
Fig. 3 das Signal eines Sensors als Funktion des Abstandes zwischen Sensor und Bearbeitungsstelle;
Fig. 4a den zeitlichen Verlauf eines Messsignals während des Betriebs der Bearbeitungsvorrichtung gemäss Fig. 1;
Fig. 4b den zeitlichen Verlauf des erwarteten Sensorsignals; und
Fig. 4c den Unterschied zwischen dem Messsignal und dem erwarteten Sensorsignal.

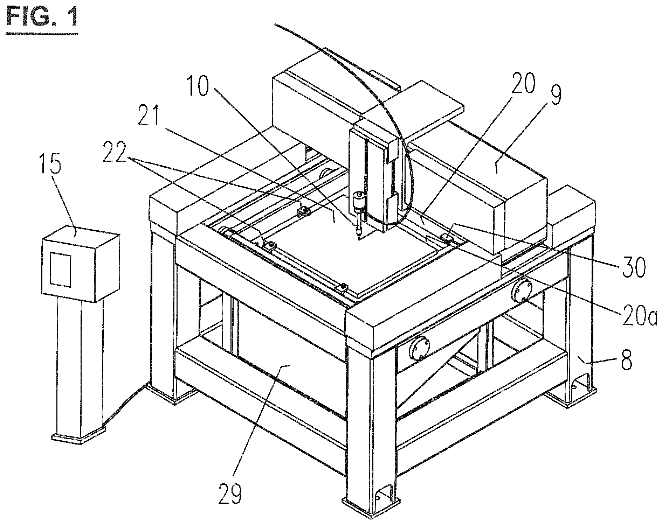

Fig. 1 zeigt eine Bearbeitungsvorrichtung mit einem auf dem Boden stehenden Rahmengestell 8, auf welchem eine verfahrbare Brücke 9 angeordnet ist. Auf dieser ist ein Bearbeitungskopf 10 angeordnet, welcher quer zur Brücke 9 verfahrbar und somit in der Ebene verfahrbar ist. Weiter ist der Bearbeitungskopf 10 vertikal zu dieser Ebene verfahrbar. Er ist somit in mindestens drei unabhängigen Achsen bewegbar. Die Ansteuerung des Bearbeitungskopfes 10 erfolgt über eine Steuerung 15, beispielsweise eine numerische Steuerung in Form einer CNC-Steuerung.

Die Bearbeitungsvorrichtung ist mit den üblichen Komponenten ausgerüstet, um beim Betrieb einen Bearbeitungsstrahl zu erzeugen, der beim Austritt aus dem Bearbeitungskopf 10 ein Werkstück 21 bearbeitet. Die Bearbeitung erfolgt dabei z. B. mittels eines Strahls, der durch eine Flüssigkeit unter Hochdruck gebildet wird. Beispiele von Bearbeitungsstrahlen sind wie folgt:
- Wasserstrahl aus reinem Wasser zum Reinwasserschneiden,
- Wasserstrahl aus Wasser mit beigefügtem Abrasivmaterial zum Abrasivwasserschneiden (das Abrasivmaterial kann dabei zur Bildung eines Wasserabrasivsuspensionsstrahls bereits bei der Hochdruckpumpe oder zur Bildung eines Abrasivinjektorstrahls erst im Bearbeitungskopf 10 beigefügt werden),
- ein aus einer anderen Flüssigkeit als Wasser gebildeter Strahl ohne oder mit zusätzlichem Abrasivmaterial.

Die Bearbeitung kann verschiedene Prozesse beinhalten, z. B.:
- Durchtrennen einer Materialschicht, insbesondere das Schneiden eines Werkstücks, indem es z. B. entlang einer Kontur getrennt wird, oder das Bohren von Löchern,
- Strukturieren der Werkstücksoberfläche, insbesondere Gravieren und/oder Entfernen von Material,
- Verdichten der Werkstücksoberfläche.

Die Steuerung 15 umfasst übliche Geräte zur Eingabe und Ausgabe von Informationen, wie Tastatur, Monitor und/oder Zeigegerät (z. B. Touchscreen), etc. und Mittel zur Datenverarbeitung und zur Erzeugung von Steuersignalen, welche im Betrieb ein Verfahren des Bearbeitungskopfes 10 bewirken. Vorzugsweise umfassen diese Mittel einen Computer, der eine Zentraleinheit (CPU) und einen Speicher, z. B. in Form eines Schreib-Lese-Speichers (RAM) und/oder einer Harddisk aufweist.

Die Bearbeitungsvorrichtung umfasst eine Werkstückauflage 20, auf welcher ein zu bearbeitendes Werkstück 21 aufliegt. Im vorliegenden Ausführungsbeispiel ist die Werkstückauflage 20 im inneren Bereich mit einer Ausnehmung 20a versehen und bildet so einen Rahmen, auf welchem das Werkstück 21 am Rand aufliegt. Die Bearbeitungsvorrichtung ist mit Haltemitteln 22 zum Festhalten des Werkstücks 21 versehen. Die Haltemittel 22 sind z. B. als Klemmen ausgebildet, mittels welchen das Werkstück 21 an die Werkstückauflage 20 gedrückt wird.

Ist der Bearbeitungsstrahl als Flüssigkeitsstrahl ausgebildet, so ist - wie hier beim Ausführungsbeispiel gemäss Fig. 1 gezeigt - innerhalb des Rahmengestells 8 ein mit Wasser füllbares Auffangbecken 29 ("Strahlcatcher") angeordnet. Dieses dient zum Abbau der Restenergie, welche der Flüssigkeitsstrahl nach der Durchdringung des Werkstücks 21 aufweist.

Zur Erfassung der zeitlichen Charakteristik des Bearbeitungsstrahls weist die Bearbeitungsvorrichtung mindestens einen Sensor 30 auf. Dieser ist mit der Steuerung 15 verbunden, in welcher die vom Sensor 30 gelieferten Daten ausgewertet werden.

Je nach Auslegung des Bearbeitungsstrahls sind diverse Arten von Sensoren einsetzbar. Nachfolgend werden mögliche Sensorarten im Detail erläutert.

### a) Schallsensor zur Erfassung des Körperschalls:

Während der Bearbeitung mit dem Bearbeitungsstrahl wird lokal im Werkstück 21 Energie freigegeben, was die Erzeugung von elastischen Wellen bewirkt, die sich im Werkstück 21 ausbreiten und den sogenannten Körperschall erzeugen.

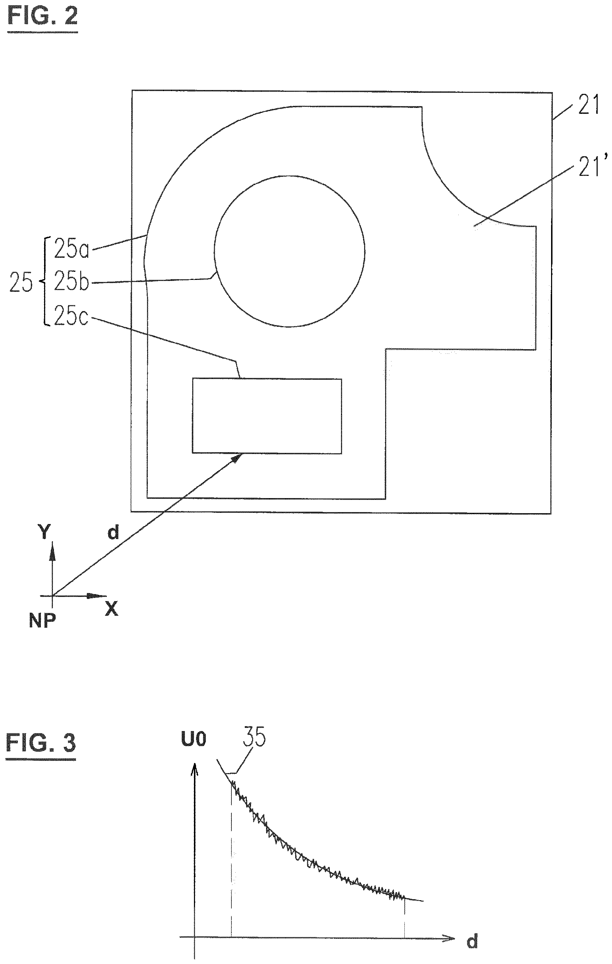

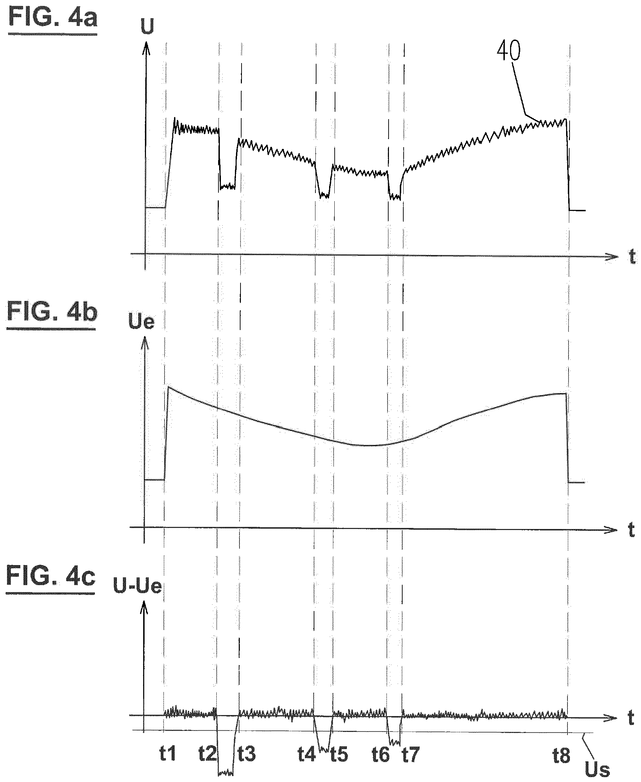

Wie nachfolgend anhand der Figuren 3 und 4 erläutert, bewirken die zeitlichen Veränderungen in der Charakteristik des Bearbeitungsstrahls entsprechende Veränderungen im Schallpegel.

Zum Erfassen des Körperschalls ist der Sensor 30 am Werkstück oder an der Bearbeitungsvorrichtung selbst angeordnet, z. B. bei der Werkstückauflage 20, wie dies in Fig. 1 dargestellt ist. Bei dieser zweiten Variante ist eine Schallübertragung vom Werkstück 21 auf die Werkstückauflage 20 gewährleistet, indem das Werkstück 21 mittels der Haltemittel 22 festgeklemmt ist. Um den Sensor 30 vor Einwirkungen durch den Bearbeitungsstrahl und/oder vor Verschmutzungen zu schützen, kann in der Werkstückauflage 20 eine Ausnehmung vorgesehen sein, in welche der Sensor 30 eingelassen ist und welche zumindest an den dem Werkstück 21 bzw. dem Bearbeitungsstrahl zugewandten Seiten geschlossen ausgebildet ist.

Je nach Anwendungszweck kann der Sensor 30 auch an anderen Stellen der Bearbeitungsvorrichtung angeordnet sein, z. B. am oder im Schneidkopf 10, bei der Pumpe, etc.

Als Sensor 30 eignet sich u. a. ein Schallemissionssensor ("Acoustic Emission Sensor"). Dieser ist z. B. in Form eines Sensorgehäuses aufgebaut, in welchem ein piezoelektrischen Messelement angeordnet ist. Der Sensor 30 ist z. B. mittels Schraube oder magnetisch an der Werkstückauflage 21 befestigt, so dass die Schwingungen der Werkstückauflage 21 an das piezoelektrische Messelement übertragen werden.

### b) Sensor zur Erfassung des Druckes:

Insbesondere ein Flüssigkeitsstrahl als Bearbeitungsstrahl wirkt während der Bearbeitung mit einem bestimmten Druck auf das Werkstück 21 ein. Dieser variiert, wenn sich die Charakteristik des Bearbeitungsstrahls wirksam verändert. Der Druck ist mittels eines Drucksensors erfassbar, der z. B. zwischen Werkstück 21 und Werkstückauflage 20 angeordnet ist.

Fig. 2 zeigt ein Beispiel einer Platte als Werkstück 21, aus welchem eine bestimmten Form 21' herausgeschnitten werden soll. Diese ist definiert durch die Kontur 25. Im vorliegenden Beispiel weist die Form 21' zwei Ausnehmungen auf, so dass sich die Kontur 25 aus einer Aussenkontur 25a und zwei Innenkonturen 25b und 25c zusammensetzt. Je nach Auslegung des Bearbeitungsstrahls wird die Wand, die bei der Durchtrennung der Materialschicht des Werkstücks 21 entsteht, nicht genau senkrecht auf der Oberseite des Werkstücks 21 stehen. Die Kontur an der Unterseite des Werkstücks 21 wird dann mit der Kontur 25 auf der Oberseite nicht genau übereinstimmen. Die geschnittene Wand wird daher gegebenenfalls nachbearbeitet, um die geforderte Qualität zu erzielen.

In Fig. 2 ist auch ein X-Y-Koordinatensystem eingezeichnet, wobei für die nachfolgende Erläuterung angenommen wird, dass ein Schallsensor als Sensor 30 im Nullpunkt NP des Koordinatensystems angeordnet ist. Der Sensor 30 ist stationär, währenddessen der Bearbeitungskopf 10 verfahren wird, um den Bearbeitungsstrahl entlang der Kontur 25 zu bewegen. Demnach wird sich die Distanz d zwischen dem Sensor 30 und dem Bearbeitungskopf 10 und somit zwischen Sensor 30 und Bearbeitungsstrahl zeitlich verändern. Entsprechend wird das Messsignal des Sensors 30 stärker oder schwächer sein.

Um diese systembedingte Veränderung beim Bearbeiten eines Werkstücks 21 herauszufiltern, wird das Messsignal vorgängig geeicht. Zu diesem Zweck wird mindestens ein Testwerkstück mit dem Bearbeitungsstrahl bearbeitet, indem dieser z. B. von der minimalen Distanz zum Nullpunkt NP wegbewegt und das Messsignal als Funktion der Distanz d erfasst wird. Fig. 3 zeigt beispielhaft das fluktuierende Messsignal U0 in Abhängigkeit der Distanz d. Das Messsignal U0 ist typischerweise ein Spannungswert, der der Intensität des Schalls entspricht. Zur Verfeinerung des Zusammenhangs zwischen Signal U0 und Distanz d können mit dem Bearbeitungsstrahl mehrere Bearbeitungsstrecken gefahren und die jeweiligen Messwerte miteinander gemittelt werden.

Anschliessend wird an die erfassten Messwerte z. B. eine mathematische Funktion gefittet. Diese ist in Fig. 3 durch die ausgezogene Kurve 35 dargestellt. Alternativ ist es auch möglich, eine Tabelle zu erstellen, welcher die Signalwerte U0 und die dazugehörenden Distanzwerte d enthält.

Diese Eichdaten in Form der Funktion bzw. der Tabelle werden anschliessend von der Steuerung 15 verwendet, um für die Bearbeitung eines bestimmten Werkstückes 21 ein erwartetes Sensorsignal Ue in der Zeit t zu berechnen. Dabei bestimmt die Steuerung 15 anhand eines Programmes aus den Daten, welche die zu schneidende Kontur 25 definieren, den zeitlichen Verlauf des Abstandes d und dann mittels der Eichdaten den zeitlichen Verlauf des zu erwartenden Sensorsignals Ue. Ue liefert somit Standardwerte, die mit dem Signal U, welches bei der Bearbeitung des Werkstücks 21 gemessenen wird, vergleichbar sind.

Fig. 4b zeigt beispielhaft das zu erwartende Sensorsignal Ue als Funktion der Zeit t. Fig. 4a zeigt beispielhaft den zeitlichen Verlauf 40 eines Messsignals U, welches der Sensor 30 bei der Bearbeitung eines Werkstücks 21 liefert. Die unterste Grafik gemäss Fig. 4c zeigt U-Ue, d. h. den Unterschied zwischen Messsignal U und erwartendem Sensorsignal Ue.

Im Beispiel gemäss Fig. 4 sind auf der Zeitachse t verschiedene Zeitpunkte, t1 bis t8, angegeben, welche folgende Bearbeitungszustände kennzeichnen:
Vom Zeitpunkt t = 0 bis t = t1 und ab dem Zeitpunkt t8 ist die Bearbeitungsvorrichtung jeweils im Betrieb, jedoch der Bearbeitungsstrahl ausgeschaltet.

Bei t1 wird der Bearbeitungsstrahl eingeschaltet und er trifft auf das Werkstück. Das Signal U des Sensors 30 fluktuiert nun in einem bestimmten Bereich. Zwischen den Zeitintervallen t1 und t2, t3 und t4, t5 und t6 sowie t7 und t8 entspricht der Bearbeitungsstrahl jeweils im Wesentlichen der erwarteten Charakteristik, so dass die Fluktuationen klein sind.

Zwischen t2 und t3, t4 und t5 sowie t6 und t7 ist die Charakteristik des Bearbeitungsstrahls merklich verändert, so dass er nicht mehr dem Standardzustand entspricht.

Beispielsweise kann es vorkommen, dass beim Abrasivwasserschneiden das Abrasivmaterial in vermindertem Masse dem Wasser zugeführt wird und daher der Bearbeitungsstrahl mit verminderter Energie auf das Werkstück einwirkt.

Eine Abweichung vom Standardzustand ist im Signalverlauf 40 dadurch erkennbar, dass der Signalwert U auf ein deutlich niedrigeres Niveau fällt. Beim Signalverlauf gemäss Fig. 4c ist erkennbar, dass dann der Wert U-Ue signifikant von Null verschieden ist.

Um derartige Abweichungen vom Standardzustand zu erfassen, wertet die Steuerung 15 den Signalverlauf 40 anhand von bestimmten Kriterien aus. Beispielsweise ist eine nicht mehr tolerierbare Abweichung gegeben, wenn folgendes Kriterium erfüllt ist:
In der Zeitspanne von t1 bis t8 weicht der Wert U mindestens einmal während einer bestimmten Zeit ts oder länger vom Standardwert Ue um mehr als einen bestimmten Schwellenwert Us ab: |u-ue| > Us für ein Zeitintervall t ≥ ts.

Das erfasste Sensorsignal U kann zum Erhalt eines Vergleichswertes auch so ausgewertet werden, dass während der Bearbeitung ein laufendes Mittel gebildet wird und davon der Wert Ue abgezogen wird, um die systembedingte Veränderung beim Verfahren des Bearbeitungsstrahls herauszufiltern.

Eine veränderte Charakteristik des Bearbeitungsstrahls kann dazu führen, dass ein Werkstück mit verminderter Qualität bearbeitet wird. Die hier beschriebene Bearbeitungsvorrichtung ermöglicht es, bei der Bearbeitung einer Folge von Werkstücken einen Indikator ("Fehlerindikator") für diejenigen Werkstücke zu erhalten, welche möglicherweise mit verminderter Qualität bearbeitet worden sind. Bei der Endkontrolle brauchen daher nicht alle Werkstücke genau geprüft zu werden, sondern es reicht, wenn die Werkstücke mit positivem Fehlerindikator untersucht werden.

Das Verfahren zum Bearbeiten wird z. B. wie folgt durchgeführt:
- Jedem Werkstück in einer Folge wird ein Kennzeichen zugeordnet, welches es erlaubt, das Werkstück eindeutig zu identifizieren. Die Kennzeichen können z. B. eine aufsteigende Zahlenfolge bilden, die von der Steuerung 15 erzeugt wird, oder es ist denkbar, die Daten, welche Datum und Zeit der Bearbeitung eines Werkstücks entsprechen, als Kennzeichen zu werden.
- Während der Bearbeitung eines jeweiligen Werkstücks wird die zeitliche Charakteristik des Bearbeitungsstrahls mittels des Sensors 30 erfasst. Gemäss dem oben dargestellten Beispiel erhält man somit für jedes Werkstück ein Signal U(t).
- Die erfasste zeitliche Charakteristik wird ausgewertet zum Erhalt mindestens eines Vergleichswertes. Gemäss dem oben dargestellten Beispiel wird die Differenz gebildet Uv = |U-Ue|, wobei Ue dem anhand der Eichung bestimmten Erwartungspegel des Sensors 30 entspricht und U die Werte im Intervall von t1 und t8 sind. Die Werte von U, welche bei ausgeschaltetem Bearbeitungsstrahl gemessen werden, also vor t1 und nach t8, werden hier nicht berücksichtigt.
- Dem Werkstück wird ein Fehlerindikator zugeordnet, welcher in Funktion der Abweichung des mindestens einen Vergleichswertes von mindestens einem Standardwert festgelegt wird. Gemäss dem oben dargestellten Beispiel wird dem Werkstück ein Fehlerindikator zugeordnet, wenn die Differenz Uv ein- oder mehrmals während mindestens ts grösser als Us ist: Uv > Us für ein Zeitintervall t ≥ ts. Der Fehlerindikator kann beispielsweise in Form eines Flags sein:
   "0" für "keine Abweichung erfasst" und
   "1" für "Abweichung erfasst"
- Bei der Endkontrolle werden diejenigen Werkstücke genauer auf ihre Bearbeitungsqualität hin untersucht, deren Flag auf "1" gesetzt ist.

Zusammen mit dem Flag oder alternativ dazu können für jedes Werkstück auch andere Daten gespeichert werden.

Beispielsweise ist es denkbar, Daten abzuspeichern, welche den Zusammenhang geben, zu welcher Zeit t der Bearbeitungsstrahl eine bestimmte Bearbeitungsstelle am Werkstück 21 bearbeitet hat (im Folgenden "XY-Daten" genannt). Je nach Auslegung der Bearbeitungsvorrichtung können diese XY-Daten z. B. die Koordinaten der Bearbeitungsstelle in einer Ebene oder im Raum sein und/oder bei einer Vielzahl von Bearbeitungsstellen am Werkstück eine Nummer, welche der jeweiligen Bearbeitungsstelle zugeordnet ist.

Es ist somit möglich, eine Abweichung Uv, die grösser als der Schwellenwert Us ist, zusammen mit den Koordinaten der Bearbeitungsstelle abzuspeichern, an welcher diese unerwünschte Abweichung aufgetreten ist. Dies erlaubt eine besonders einfache Endkontrolle, da das Werkstück gezielt an denjenigen Stellen auf ihre gewünschten Bearbeitungsqualität untersucht werden kann, an denen eine Unregelmässigkeit in der Charakteristik des Bearbeitungsstrahls aufgetreten ist.

So sind z. B. bei der Herstellung von Turbinenschaufeln eine Vielzahl von Löchern zu Bohren. Die Anzahl kann mehrere Hunderte betragen, so dass das Ausmessen jedes Loches sehr zeitintensiv ist. Durch das zusätzliche Aufzeichnen von XY-Daten, welche den zeitlichen Verlauf der Position des Bearbeitungsstrahls wiedergegeben, können gezielt bei einer jeweiligen Turbinenschaufel diejenigen Löcher gefunden und ausgemessen werden, bei denen die vom Sensor 30 gemessenen Werte eine unerwünschte Abweichung zeigen.

Die XY-Daten, welche den zeitlichen Verlauf der Position des Bearbeitungsstrahls wiedergegeben, sind auf verschiedene Arten erhältlich:
Beispielsweise ist die Steuerung 15 so eingerichtet, dass aus den Programmierdaten, welche für die jeweilige Bearbeitung das zeitliche Verfahren des Bearbeitungskopfs 10 festlegen, die XY-Daten herauslesbar und/oder erzeugbar sind. Dies ist z. B. bei Steuerungen 15 möglich, welche eine SPS ("speicherprogrammierbare Steuerung") aufweisen.

Für eine präzise Positionierung des Bearbeitungskopfes 10 ist die Bearbeitungsvorrichtung meistens mit einer Regelung versehen, mittels welcher die Motoren zum Bewegen des Bearbeitungskopfes 10 geregelt werden. Dabei wird der Istwert mittels geeigneter Sensoren, z. B. Inkrementalgeber zur Erfassung von Lage- und/oder Winkeländerungen, erfasst und die Position entsprechend der Abweichung vom Sollwert korrigiert. Es ist somit möglich, aus den Signalen der Sensoren die zeitliche Bewegung des Bearbeitungskopfs 10 zu ermitteln.

Weiter ist es denkbar, ein separates Messsystem vorzusehen, welches einen oder mehrere Sensoren aufweist, um die Bewegung des Bearbeitungskopfs 10 in der Zeit zu erfassen. Als weiterführende Variante ist es denkbar, ein Protokoll zu erstellen und zu speichern, welches eine oder mehrere der folgenden Informationen enthält:
- Kennzeichen des Werkstücks,
- Fehlerindikator,
- die Koordinaten (Xb,Yb) der bearbeitenden Stellen als Funktion der Zeit und/oder des Weges,
- bei mehreren Bearbeitungsstellen am Werkstück eine eindeutige Nummer N, welche der jeweiligen Bearbeitungsstelle zugeordnet ist (z. B. weist das Werkstück eine bestimmte Anzahl von Konturlinien als Bearbeitungsstellen auf, die nummeriert sind, z. B. von 1 bis N1),
- das Signal U als Funktion der Zeit, der Nummer N und/oder der Koordinaten (Xb,Yb),
- den Eichpegel Ue als Funktion der Zeit, der Nummer N und/oder der Koordinaten (Xb,Yb),
- die Abweichung Uv als Funktion der Zeit, der Nummer N und/oder der Koordinaten (Xb,Yb).

Die oben erwähnten Koordinaten (Xb,Yb) können X-, Y- und/oder Z-Koordinaten umfassen.

Das Erstellen eines Protokolls ist z. B. dann angezeigt, wenn das bearbeitete Werkstück in einem Bereich eingesetzt werden soll, welcher besonders hohe Ansprüche an die Sicherheit hat, z. B. im Flugzeugbau, in der Medizinaltechnik, im Turbinenbau, etc.

Das Erstellen und Speichern von Daten aus dem Herstellungsprozess, wie oben dargestellt, bietet die Möglichkeit, den Verlauf der Herstellung bei einem jeweiligen Werkstück bzw. Teil nachträglich zu überprüfen. Dies kann z. B. bei Garantie- oder Haftungsfragen zum Tragen kommen.

In einer beispielhaften Ausführungsform werden die X-, Y- und Z-Positionen aus der Steuerung ausgelesen und zeitlich mit den Messsignalen aufgezeichnet. Eine etwaige Auswertung kann auch im Offline-Modus gemacht werden. Es wird eine eindeutige Identifizierung den Daten hinzugefügt, wie Datum, Zeit, eingestellte Parameter, Programm, Nummer des Werkstücks, Nummer der Kontur und die Position auf der Kontur.

Als weiterführende Variante ist es ebenfalls denkbar, die erfasste Abweichung Uv zur Steuerung des Bearbeitungsprozesses einzusetzen, um so diesen zu optimieren. Zu diesem Zweck ist der mindestens eine Sensor 30 Teil eines Regelkreises, der zum Verändern der Charakteristik des Bearbeitungsstrahls in Abhängigkeit der Abweichung Uv eingerichtet ist. Bei der Regelung wird der aktuelle Wert von Uv als "Istwert" laufend von der Steuerung 15 berechnet und mit dem vorgegebenen "Sollwert" verglichen, welcher hier Null entspricht. Die Steuerung 15 steuert bei einer zu grossen Regelabweichung (gemäss obigem Beispiel wenn die Differenz zwischen Ist- und Sollwert über dem Schwellenwert liegt) die Bearbeitungsmaschine so, dass bestimmte Prozessparamater verändert werden. Beispielsweise kann die Verfahrgeschwindigkeit des Bearbeitungsstrahls und/oder seine wirksame Bearbeitungsenergie verringert werden. So wird z. B. bei der Bearbeitung mittels Flüssigkeitsstrahls der Druck verringert, so dass der Strahl mit kleinerer Geschwindigkeit aus dem Bearbeitungskopf 10 tritt. Wird der Flüssigkeitsstrahl zusammen mit Abrasivmaterial eingesetzt, so ist ein einstellbarer Prozessparamater auch dadurch gegeben, indem die Menge an beigemischtem Abrasiv verändert wird.

Die Regelung kann auch so eingerichtet sind, dass bei einer Häufung von Ereignissen, in denen die Abweichung Uv den Schwellenwert übersteigt und dann wieder unterschreitet, der Bearbeitungsprozess unterbrochen wird, um dem Benutzer die Gelegenheit zu geben, die Einstellungen an der Bearbeitungsmaschine zu überprüfen. Beispielsweise kann es beim Abrasivwasserschneiden vorkommen, dass das Abrasivmaterial schubweise dem Wasser zugeführt wird und es zu einer unerwünschten Pulsation in der Wirkung des Flüssigkeitsstrahls kommt.

Als weitere Variante ist es denkbar, zu Beginn der Bearbeitung eines Werkstückes die erfasste zeitliche Charakteristik dazu zu verwenden, Fehler in den gewählten Einstellungen zu erkennen. Beispielsweise sind für die Einstellung verschiedene Einstellparameter einzugeben, wie Materialart des zu bearbeitenden Werkstücks, Dicke des Werkstücks, Druck und Art des Abrasivmaterials beim Abrasivwasserschneiden, etc. In der Steuerung 15 ist eine Tabelle gespeichert, welche den Zusammenhang zwischen Einstellparametern und zu erwartendem Sensorsignal definiert. Diese Tabelle ist empirisch und/oder anhand von Testläufen erstellbar und/oder ergibt sich aus einer Berechnung aus empirisch ermittelten Daten und Formeln. Beispielsweise ist die Tabelle so ausgestaltet, dass das zu erwartende Sensorsignal bei bestimmten vorgegebenen Einstellparametern in einem bestimmten Frequenzbereich liegt. Im Betrieb prüft nun die Steuerung 15, ob das gemessene Sensorsignal den Frequenzen entspricht, die bei den eingegebenen Einstellparametern zu erwarten sind. Ist dies nicht der Fall, so erzeugt die Steuerung 15 eine Fehlermeldung. Der Benutzer kann dann die aktuellen Einstellungen überprüfen und entsprechend korrigieren.

Es ist auch möglich, für den Vergleich zwischen zu erwartenden und gemessenen Werten gespeicherte Daten zu verwenden, welche für ein bestimmtes Referenzmaterial zu erwartende Frequenz und/oder Energie umfassen.

Allgemein können eine Prozessüberprüfung in einem bestimmten geeigneten Material und eine Prozessvalidierung vorteilhaft sein z.B. bei der Herstellung von Teilen für die Medizinaltechnik.

Aus der vorangehenden Beschreibung sind dem Fachmann zahlreiche Abwandlungen zugänglich, ohne den Schutzbereich der Erfindung zu verlassen, der durch die Ansprüche definiert ist.

Es ist denkbar, zwei oder mehr Sensoren 30 einzusetzen, um die zeitliche Charakteristik des Bearbeitungsstrahls zu erfassen. Die Sensoren 30 sind an der Bearbeitungsvorrichtung an unterschiedlichen Orten angeordnet, so dass der Signalverlauf im Pegel und/oder in der Zeit in der Regel unterschiedlich ist. Durch die Messung mittels mehreren Sensoren 30 können u. a. Zeitverzögerungen zwischen dem Auftreten einer unerwünschten Abweichung in der Charakteristik des Bearbeitungsstrahls und der eigentlichen Messung sehr präzise bestimmt werden. Die unerwünschte Abweichung lässt sich somit sehr genau zur Bearbeitungsstelle am Werkstück zuordnen, wo die Abweichung aufgetaucht ist und somit die Bearbeitung gegebenenfalls nicht optimal war.

In einer vereinfachten Ausführungsform lässt sich die Zeitverzögerung auch bei der Messung mittels eines einzelnen Sensor 30 berücksichtigen, indem ein zeitlicher Korrekturwert, der z. B. experimentell bestimmt wird, miteinberechnet wird.

## Patentansprüche

1. Verfahren zum Bearbeiten einer Folge von Werkstücken (21) mittels mindestens eines Bearbeitungsstrahls, welcher gebildet ist aus einer Flüssigkeit mit oder ohne Abrasivteilchen, wobei beim Verfahren
jedem Werkstück (21) ein Kennzeichen zum eindeutigen Identifizieren des Werkstücks zugeordnet wird,
während der Bearbeitung eines jeweiligen Werkstücks die zeitliche Charakteristik (40) des Bearbeitungsstrahls mittels mindestens eines Sensors (30) erfasst wird,
die erfasste zeitliche Charakteristik (40) ausgewertet wird zum Erhalt mindestens eines Vergleichswertes (Uv), und
zum Erfassen einer fehlerhaften Bearbeitung der mindestens eine Vergleichswert mit mindestens einem Schwellenwert (Us) verglichen wird, wobei der mindestens eine Sensor (30) eingerichtet ist, Schwingungen in einem Festkörper und/oder den Druck, welcher der Bearbeitungsstrahl auf eine Werkstückauflage (20) und/oder ein Werkstück (21) ausübt, zu erfassen.

2. Verfahren nach Anspruch 1, wobei dem jeweiligen Werkstück (21) ein Fehlerindikator zugeordnet wird, welcher in Funktion der Abweichung des mindestens einen Vergleichswertes vom mindestens einen Schwellenwert festgelegt wird.

3. Verfahren nach Anspruch 2, bei welchem der Fehlerindikator ein Flag umfasst und/oder aus dem Fehlerindikator Informationen darüber erhältlich sind, an welchen der Bearbeitungsstellen (25), an welchen das Werkstück (21) mittels des Bearbeitungsstrahls bearbeitet worden ist, der Betrag des mindestens einen Vergleichswertes grösser als der mindestens eine Schwellenwert ist.

4. Verfahren nach einem der vorangehenden Ansprüche, bei welchem der mindestens eine Vergleichswert, Uv, gebildet wird in Funktion eines vorbestimmten Erwartungswertes Ue, vorzugsweise wird der Vergleichswert Uv gebildet als Betrag der Differenz zwischen Messsignal, U, des mindestens einen Sensors (30) und Erwartungswert Ue: Uv = |U-Ue|.

5. Verfahren nach einem der vorangehenden Ansprüche, bei welchem das Vorliegen eines Fehlers in der Bearbeitung in Funktion von folgendem Kriterium festgelegt wird: es gibt während der Bearbeitung eines Werkstücks (21) mindestens ein Zeitintervall, welches mindestens eine vorgegebene Zeit dauert und während welcher der Betrag des mindestens einen Vergleichswerts den mindestens einen Schwellenwert übersteigt.

6. Verfahren nach einem der vorangehenden Ansprüche, bei welchem eine Eichung durchgeführt, in welcher bei eingeschaltetem Bearbeitungsstrahl das Signal (U0) des mindestens einen Sensors (30) als Funktion des Abstandes (d) des Bearbeitungsstrahls von einem Koordinatenursprung (NP) erfasst wird, wobei die Eichung vorzugsweise vorgängig zur Bearbeitung der Folge von Werkstücken (21) durchgeführt wird.

7. Verfahren nach einem der vorangehenden Ansprüche, bei welchem der mindestens eine Sensor (30) Teil eines Regelkreises ist zum Verändern der Charakteristik des Bearbeitungsstrahls in Abhängigkeit der Abweichung des mindestens einen Vergleichswerts vom mindestens einen Schwellenwert.

8. Verfahren nach Anspruch 7, wobei der Regelkreis mindestens eine der folgenden Komponenten umfasst:
- Antrieb zum Verfahren des Bearbeitungsstrahls,
- Pumpe zum Leiten des Bearbeitungsstrahls unter Druck aus einem Bearbeitungskopf (10),
- Dosiereinrichtung zum Beifügen von Abrasivmaterial zum Bearbeitungsstrahl.

9. Verfahren nach einem der vorangehenden Ansprüche, bei welchem die Bearbeitung eines Werkstücks (21) unterbrochen wird, wenn der Vergleichswert mehrmals in Folge den Schwellenwert übersteigt und unterschreitet.

10. Verfahren nach einem der vorangehenden Ansprüche, wobei während der Bearbeitung das Werkstück (21) auf einer Werkstückauflage (20) aufliegt, welche den mindestens einen Sensor (30) umfasst.

11. Verfahren nach einem der vorangehenden Ansprüche, wobei der Bearbeitungsstrahl ein Schneidstrahl ist zum Durchtrennen einer Materialschicht.

12. Verfahren nach einem der vorangehenden Ansprüche, welches zum Erhalt des mindestens einen Vergleichswertes (Uv) den Vergleich der erfassten zeitlichen Charakteristik (40) mit Eichwerten umfasst, welche die Änderung des Signals des mindestens einen Sensors (30) angeben bei einer Änderung des Abstandes zwischen Bearbeitungsstrahl und Sensor (30).

13. Verfahren nach einem der vorangehenden Ansprüche, wobei zum Erkennen einer fehlerhaften Einstellung der mindestens eine Vergleichswert (Uv) erhalten wird, indem die erfasste zeitliche Charakteristik (40) ausgewertet und mit gespeicherten Daten verglichen wird, welche den Zusammenhang zwischen Einstellparametern und zu erwartendem Sensorsignal definieren und zum Erhalt des mindestens einen Schwellenwerts (Us) verwendet werden, wobei vorzugsweise der Vergleich im Frequenzspektrum erfolgt.

14. Verfahren nach einem der vorangehenden Ansprüche, wobei für das jeweilige bearbeitete Werkstück Daten gespeichert werden, welche das Kennzeichen und Informationen zur erfassten zeitlichen Charakteristik umfassen, wobei die Daten als Nachweis für geforderte Herstellungsbedingungen dienen.

15. Bearbeitungsvorrichtung, mit welcher das Verfahren nach einem der vorangehenden Ansprüche durchführbar ist, wobei
die Bearbeitungsvorrichtung im Betrieb zum Bearbeiten von Werkstücken (21) mindestens einen Bearbeitungsstrahl erzeugt und
mindestens einen Sensor (30) umfasst zum Erfassen der zeitlichen Charakteristik (40) des Bearbeitungsstrahls während der Bearbeitung der Werkstücke, wobei
der mindestens eine Sensor (30) eingerichtet ist, Schwingungen in einem Festkörper und/oder den Druck, welcher der Bearbeitungsstrahl auf eine Werkstückauflage (20) und/oder ein Werkstück (21) ausübt, zu erfassen, und wobei
die Bearbeitungsvorrichtung mit einem Programm ausgestattet ist, bei dessen Ausführung das Verfahren durchführbar ist.

16. Bearbeitungsvorrichtung nach Anspruch 15, mit einer Werkstückauflage (20), welche den mindestens einen Sensor (30) umfasst und auf welcher ein Werkstück (21) während der Bearbeitung aufliegt.

17. Bearbeitungsvorrichtung nach einem der Ansprüche 15 bis 16, wobei die Werkstückauflage einen Rahmen (20) umfasst, an welchem ein Werkstück (21) mit Haltemitteln (22) befestigbar ist.

18. Verwendung des Verfahrens nach einem der Ansprüche 1 bis 14 und/oder der Bearbeitungsvorrichtung nach einem der Ansprüche 15 bis 17 zum Bearbeiten von Werkstücken, insbesondere zum Strukturieren und/oder Verdichten der Werkstücksoberfläche, zum Schneiden, zum Bohren.

## Claims

1. Method for machining a series of workpieces (21) by means of at least one machining jet, which is formed from a liquid with or without abrasive particles, wherein in the method
each workpiece (21) is associated with an identifier for uniquely identifying the workpiece,
during the machining of a respective workpiece, the temporal characteristic (40) of the machining jet is detected by means of at least one sensor (30),
the detected temporal characteristic (40) is evaluated so as to obtain at least one comparative value (Uv), and
for detecting incorrect machining, the at least one comparative value is compared with at least one threshold value (Us), wherein the at least one sensor (30) is configured to detect vibrations in a solid body and/or the pressure, which the machining jet exerts onto a workpiece support (20) and/or a workpiece (21).

2. The method according to claim 1, wherein the respective workpiece (21) is associated with an error indicator, which is determined as a function of the deviation of the at least one comparative value from the at least one threshold value.

3. Method according to claim 2, wherein the error indicator comprises a flag, and/or information can be obtained from the error indicator, at which of the machining areas (25), at which the workpiece (21) has been machined by means of the machining jet, the absolute value of the at least one comparative value is greater than the at least one threshold value.

4. Method according to any one of the preceding claims, wherein the at least one comparative value, Uv, is formed as a function of a predetermined expectation value Ue, it being preferred that the comparative value Uv is formed as absolute value of the difference between the measurement signal, U, of the at least one sensor (30) and the expectation value Ue: Uv = |U-Ue|.

5. Method according to any one of the preceding claims, wherein the existence of an error during machining is determined as a function of the following criterion: when machining a workpiece (21), there is at least one time interval which lasts at least for a predetermined time and. during which the absolute value of the at least one comparative value exceeds the at least one threshold.

6. Method according to any one of the preceding claims, wherein a calibration is carried out in which, with the machining jet turned on, the signal (U0) of the at least one sensor (30) is detected as a function of the distance (d) of the machining jet from a point of origin (NP), wherein the calibration is preferably carried out prior to machining the series of workpieces (21).

7. Method according to any one of the preceding claims, wherein the at least one sensor (30) is part of a closed loop control for changing the characteristic of the machining jet in dependence on the deviation of the at least one comparative value from the at least one threshold value.

8. Method according to claim 7, wherein the closed loop control comprises at least one of the following components:
- a drive for moving the machining jet,
- a pump for ejecting the machining jet under pressure out of a machining head (10),
- a dosing device for adding abrasive material to the machining jet.

9. Method according to any one of the preceding claims, wherein machining a workpiece (21) is interrupted if the comparative value exceeds the threshold value and falls below it several times in a row.

10. Method according to any one of the preceding claims, wherein, during the machining, the workpiece (21) is supported on a workpiece support (20), which comprises the at least one sensor (30).

11. Method according to any one of the preceding claims, wherein the machining jet is a cutting jet for cutting through a material layer.

12. Method according to any one of the preceding claims, which, for the obtaining of the at least one comparative value (Uv), comprises the comparison of the detected temporal characteristic (40) with calibration values, which define the change of the signal of the least one sensor (30) when the distance between the machining jet and the sensor (30) is changed.

13. Method according to any one of the preceding claims, wherein, for detecting an incorrect setting, the at least one comparative value (Uv) is obtained by evaluating the detected temporal characteristic (40) and comparing it with data stored, which define the relationship between the setting parameters and the sensor signal to be expected and which are used for obtaining the at least one threshold value (Us), wherein preferably the comparison is done in the frequency spectrum.

14. Method according to any one of the preceding claims, wherein for the respective machined workpiece data are stored, which comprise the identifier and information on the detected temporal characteristic, wherein the data serves for a verification of required production conditions.

15. Machining device, by means of which the method according to any one of the preceding claims can be carried out, wherein
the machining device generates during the operation at least one machining jet for machining workpieces (21), and
comprises at least one sensor (30) for detecting the temporal characteristic (40) of the machining jet when machining the workpieces, wherein
the at least one sensor (30) is configured to detect vibrations in a solid body and/or the pressure, which the machining jet exerts onto a workpiece support (20) and/or a workpiece (21), and wherein
the machining device is provided with a program, during the execution of which the method can be carried out.

16. Machining device according to claim 15, with a workpiece support (20), which comprises the at least one sensor (30) and on which a workpiece (21) is supported during machining.

17. Machining device according to any one of the claims 15 to 16, wherein the workpiece support comprises a frame (20), on which a workpiece (21) can be fastened by means of holding means (22).

18. Use of the method according to any one of the claims 1 to 14 and/or the machining device according to any one of the claims 15 to 17 for machining workpieces, in particular for structuring and/or compacting the workpiece surface, for cutting, for drilling.

## Revendications

1. Procédé d'usinage d'une série de pièces à usiner (21) au moyen d'au moins un jet d'usinage formé d'un liquide contenant ou non des particules abrasives, dans lequel procédé:
un signe distinctif est associé à chaque pièce (21) lequel permet l'identification univoque de ladite pièce,
la caractéristique temporelle (40) du jet d'usinage est detectée pendant l'usinage de chaque pièce au moyen d'au moins un capteur (30),
la caractéristique temporelle (40) detectée est évaluée afin d'obtenir au moins une valeur de référence (Uv), et
pour détecter un usinage défectueux, ladite au moins une valeur de référence est comparée à au moins une valeur seuil (Us), ledit au moins un capteur (30) étant adapté à détecter des vibrations dans un corps solide et/ou la pression qu'exerce le jet d'usinage sur un support (20) de pièce à usiner et/ou sur une pièce à usiner (21).

2. Procédé selon la revendication 1, où à chaque pièce à usiner (21) est associé un indicateur de défaut lequel est fixé en fonction de l'écart de ladite au moins une valeur de référence par rapport à ladite au moins une valeur seuil.

3. Procédé selon la revendication 2, dans lequel l'indicateur de défaut comprend un drapeau et/ou l'indicateur de défaut permet d'obtenir des informations sur ceux des points d'usinage (25) auxquels la pièce (21) a été usinée au moyen du jet d'usinage où la valeur absolue de ladite au moins une valeur de référence est supérieur à ladite au moins une valeur seuil.

4. Procédé selon l'une des revendications précédentes, dans lequel ladite au moins une valeur de référence, Uv, est formée en fonction d'une valeur attendue prédéterminée Ue, la valeur de référence Uv étant préférablement formée par la valeur absolue de la différence entre le signal de mesure, U, dudit au moins un capteur (30) et la valeur attendue Ue: Uv = |U-Ue|.

5. Procédé selon l'une des revendications précédentes, dans lequel la présence d'un défaut d'usinage est déterminée en fonction du critère suivant: il existe pendant l'usinage d'une pièce (21) au moins un intervalle de temps qui présente au moins une durée déterminée et pendant lequel la valeur absolue de ladite au moins une valeur de référence dépasse ladite au moins une valeur seuil.

6. Procédé selon l'une des revendications précédentes, dans lequel un calibrage est effectué où le signal (U0) dudit au moins un capteur (30) en fonction de la distance (d) du jet d'usinage d'un point d'origine des coordonnées (NP) est détecté alors que le jet d'usinage est enclenché, ledit calibrage étant préférablement effectué avant l'usinage de la série de pièces (21).

7. Procédé selon l'une des revendications précédentes, dans lequel ledit au moins un capteur (30) fait partie d'une boucle de régulation permettant de varier la caractéristique du jet d'usinage en fonction de l'écart de ladite au moins une valeur de référence par rapport à ladite au moins une valeur seuil.

8. Procédé selon la revendication 7, où la boucle de régulation comprend l'un au moins des composants suivants:
- entraînement pour le déplacement du jet d'usinage,
- pompe pour décharger sous pression le jet d'usinage d'une tête d'usinage (10),
- dispositif de dosage pour ajouter un abrasif au jet d'usinage.

9. Procédé selon l'une des revendications précédentes, dans lequel l'usinage d'une pièce (21) est interrompu lorsque ladite valeur de référence dépasse à plusieurs reprises la valeur seuil vers le haut et vers le bas.

10. Procédé selon l'une des revendications précédentes, où la pièce (21) repose pendant l'usinage sur un support (20) de pièce à usiner qui comprend ledit au moins un capteur (30).

11. Procédé selon l'une des revendications précédentes, où le jet d'usinage est un jet de découpe pour la séparation d'une couche de matériau.

12. Procédé selon l'une des revendications précédentes, qui, afin d'obtenir ladite au moins une valeur de référence (Uv), comprend la comparaison de la caractéristique temporelle détectée (40) à des valeurs de calibrage qui indiquent la variation du signal dudit au moins un capteur (30) lors d'une variation de la distance entre le jet d'usinage et le capteur (30).

13. Procédé selon l'une des revendications précédentes, où afin de détecter une erreur de réglage, ladite au moins une valeur de référence (Uv) est obtenue en évaluant ladite caractéristique temporelle détectée (40) et en la comparant à des données mémorisées qui définissent la relation entre les paramètres de réglage et le signal attendu du capteur et sont utilisés pour obtenir ladite au moins une valeur seuil (Us), la comparaison étant préférablement effectuée dans le spectre des fréquences.

14. Procédé selon l'une des revendications précédentes, où des données sont enregistrées pour chaque pièce usinée qui comprennent le signe distinctif et des informations sur la caractéristique temporelle détectée, lesdites donnes servant de justificatif de conditions de fabrication exigées.

15. Dispositif d'usinage permettant de mettre en oeuvre le procédé selon l'une des revendications précédentes, où
le dispositif d'usinage génère en cours de fonctionnement au moins un jet d'usinage pour usiner des pièces (21) et
comprend au moins un capteur (30) pour détecter la caractéristique temporelle (40) du jet d'usinage pendant l'usinage des pièces,
ledit au moins un capteur (30) étant adapté à détecter des vibrations dans un corps solide et/ou la pression qu'exerce le jet d'usinage sur un support (20) de pièce à usiner et/ou sur une pièce à usiner (21), et
le dispositif d'usinage étant muni d'un programme dont l'exécution permet la mise en oeuvre du procédé.

16. Dispositif d'usinage selon la revendication 15, comprenant un support (20) de pièce à usiner qui comprend ledit au moins un capteur (30) et sur lequel repose une pièce (21) pendant l'usinage.

17. Dispositif d'usinage selon l'une des revendications 15 à 16, où ledit support de pièce à usiner comprend un bâti (20) auquel une pièce (21) peut être fixée à l'aide de moyens de retenue (22).

18. Utilisation du procédé selon l'une des revendications 1 à 14 et/ou du dispositif d'usinage selon l'une des revendications 15 à 17 pour l'usinage de pièces, plus particulièrement pour structurer et/ou densifier la surface de la pièce, pour couper, pour percer.
